# EUROPEAN PATENT APPLICATION

(11) **EP 3 984 601 A1**
(43) Date of publication of application: **20.04.2022**
(21) Application number: 21202777.5
(22) Date of filing: 14.10.2021
(51) Int. Cl.: A62B 9/02, B63C 11/22, G05D 16/10

(54) **SEAT FOR A GAS FLOW REGULATOR AND GAS FLOW REGULATOR INCLUDING SAME**

(30) Priority: 14.10.2020 US 202017070741
(71) Applicant: Jacobsmeyer, Russell, Labadie MO 63055 (US); Posey, Brian Kelley, St. Louis, MO 63123 (US)
(72) Inventor: Jacobsmeyer, Russell, Labadie MO 63055 (US); Posey, Brian Kelley, St. Louis, MO 63123 (US)
(74) Representative: Casbon, Paul Richard

(57) **Abstract**

A regulator seat, and a gas regulator that includes this seat, which typically provides for increased accuracy in regulation without substantial increase in weight. The regulator with such a seat is particularly valuable at lower resultant flow where accuracy changes can be more pronounced. The regulator seat is designed so that the stationary seat in the front housing, which mates with the moveable second seat on the valve piston, has a generally cylindrical shape as opposed to the shape of a conical frustum.

## Description

### BACKGROUND OF THE INVENTION

### Field of the Invention

This invention relates to a gas flow regulator. Particularly to a seat for a gas flow regulator which is particularly suitable for small gas flow regulators that require high accuracy and consistency in resultant pressure. The invention also relates to breathing apparatus comprising the gas regulator, and to a user-portable compressed gas storage vessel comprising a gas regulator.

### Description of the Related Art

Gas flow regulators, or more simply gas regulators or just regulators, are used in large numbers of applications across a variety of industries. While many of these are in industrial applications, one of the most familiar is in connection with underwater breathing apparatus (e.g. S.C.U.B.A. gear) where the regulator is used to make sure that pressurized compressed air from a tank of compressed air is provided at a breathable rate to those who wish to remain underwater for an extended period of time.

While this may be the most well-known use of regulators in breathing, it is only one of many. In the vast majority of applications which provide gas for breathing, regulators are used to regulate the supply of gas to the user. The reason for this is generally quite simple. Regulators allow for the gas to be stored in a compressed state which could not be inhaled by a human directly without danger. Compressed gas typically requires substantially reduced storage space compared to uncompressed gas making it easier to carry and store.

Often, compressed gases will even become liquid if they are sufficiently compressed to change state. These types of gases can, thus, take up substantially less space than a similar volume of their gaseous form. Further, while compressed gas storage typically requires specially designed vessels to maintain and resist the increased pressure from the gas, the increased cost necessary due to the sophistication and/or robust nature of these vessels is often dramatically less than building a simpler vessel of much larger size. This can be on top of the benefits of storage space and transportability discussed above.

As would probably be apparent, certain gases, typically oxygen or oxygen as part of another gas such as air, can be useful in a wide variety of situations for human breathing. Compressed gas, and specifically compressed oxygen, is used for breathing in situations where atmospheric air is not available or has insufficient oxygen content to supply the human body. This can include, for example, underwater, in outer space, in confined areas where oxygen content is rapidly depleted by the breathing activity of those present, or at particularly high altitude.

Compressed gas for breathing is also used in situations where atmospheric air is compromised by other materials. For example, compressed breathing gas is often used by those operating in conjunction with fire where the combustion of the fire may be placing toxic materials (as well as heat) into the air, and using up the oxygen in the air, rendering it unbreathable. Further, operation in contaminated environments such as where airborne disease-inducing microorganisms exist or in chemically or radiologically dangerous environments can require the use of breathing air. This can be because the air now includes particles which can be dangerous to inhale, or because protection of the entire body from the environmental contaminant is required. In these later situations, breathable air inside the contamination unit or suit is necessary for isolation of the body, even if the outside air is technically "breathable" based on its chemical composition.

While the uses of compressed gas for breathing are wide ranging, it is often particularly valuable to have access to gas for breathing in medical situations. There are typically two forms of compressed gas which may be used in conjunction with breathing depending on medical scenario. In the first case, gas containing oxygen, but typically other gases more indicative of clean atmospheric air, is provided to patients who are unable to breathe on their own. This is typically in Intensive Care Units (ICUs) where invasive machines such as ventilators are effectively taking over for the patient's lungs which may or may not function and which mechanically cannot take in enough air to supply sufficient oxygen to the body to support it.

Patients with other conditions or in certain disease states often need only be provided with air with increased oxygen content, instead of requiring invasive medical equipment, in order to effectively breathe. In these cases, the patient's lungs are typically mechanically capable of taking in gas. However, their mechanical strength may be insufficient to take in a large enough breath to supply sufficient oxygen, or lung tissue may be compromised in a way that it does not absorb oxygen as effectively as necessary to sustain body function based on the oxygen content of atmospheric air. The use of supplemental oxygen in these cases allows for those with decreased lung capacity, or other problems with the operation of the lungs, to obtain sufficient oxygen for continued well-being with each breath.

The need for supplemental oxygen is quite different than with invasive ventilation. Supplemental oxygen is typically provided by simply enriching air near the nose (or mouth) of a user so a user's breath will take in gas with increased oxygen content compared to atmospheric air. This may be referred to as "oxygen therapy" in some contexts. In other cases, improved air access is provided simply by increasing air flow around the nose or mouth. The provision of oxygen in these scenarios is often accomplished with a nasal cannula where the supplemental oxygen is supplied right at the nostril, but the nostril is not inhibited from taking in atmospheric air around the nasal cannula.

These types of breathing supplementation are commonly provided on a temporary basis. For example, oxygen therapy is commonly used with certain individuals experiencing breathing problems as a result of COVID-19 or may only be necessary for individuals with reduced lung function in certain circumstances, for example when they are exerting themselves. Alternatively, for some individuals, oxygen supplementation of air may be effectively permanent requiring them to breathe supplemented air at all times for the rest of their life.

In medical oxygen applications, and particularly with those where oxygen is used near constantly by a patient, in ambulances which can lack the infrastructure to provide a more built-in supply, for patient movement within a medical setting, or where it may be needed on an emergency basis, it is often necessary for the patient to carry a tank of oxygen with them. For those patient's which desire to be and are otherwise capable of maintaining traditional mobility (as opposed to those confined to wheelchairs, for example) or where space is limited, these tanks typically have oxygen which has been heavily compressed to allow for a relatively large amount of oxygen to be carried in a relatively small container. This allows for a user to carry the tank on their person instead of having to wheel it by their side or place it on a wheelchair or other mobility enhancing device.

A mobile oxygen tank for use while transporting a patient will generally have enough gas for transportation of a number of patients as most patients will only require the tank for a relatively short period of time when moving between locations. Each tank will generally be used to transport a first patient occupying the bed or wheelchair (or other method of transportation, such as an ambulance) and will then remain with the bed or wheelchair, to be used with the next patient to occupy that bed or wheelchair. In this way, the tank is always available to a patient that would need it. For patients that regularly need small amounts of supplemental oxygen, the tanks may be even smaller so as to be readily transportable on the person even when they are not in use such as on a waistband or in a backpack or other bag.

As should be apparent, it is necessary for such a pressurized oxygen source to include a regulator to make sure that the oxygen is supplied at the appropriate rate for the specific patient as an individual patient's needs will generally vary and it is undesirable to use up a tank of oxygen quicker than necessary due to expense and inconvenience of replacing or refilling it. As these tanks are often specifically geared for shorter term uses and specific needs, (e.g. only when the patient is exerting themselves) they usually have a specific (and often much smaller) total weight than longer term tanks or even permanent hookups. As such, they can often require increased gas regulation and often require very accurate regulation to inhibit potential injury from the resultant gas.

Further, it is always important that a medical regulator accurately supply the oxygen at a specified rate. This makes sure both that the patient can get the amount of oxygen they need, and that that the amount of remaining oxygen in the tank (which is often calculated using the expected flow rate through the regulator) is accurate. This inhibits a patient unexpectedly finding that the tank is empty when they need it or thinking that they are obtaining a correct amount of oxygen when too little is actually being supplied.

At the same time, regulators can be relatively heavy and they increase the weight of any oxygen supply system. As regulators in these circumstances typically need to deal with oxygen which is often at extremely high pressure when discharged from the tank, most regulators are made from metals to be able to withstand the pressure exposure. Further, they typically need to be able to operate to effectively supply oxygen in a variety of conditions. This may require them to have adjustable controls to allow for them to provide the oxygen at a variety of different pressures, or at least to supply a specific amount of oxygen very accurately. As the regulator will typically need to be carried with the tank, increased weight of the regulator can result in a decreased amount of oxygen, or decreased functionality due to removal of other components, that can be comfortably carried with the tank.

Typically, the desire to reduce the size, and thus weight, of a regulator has resulted in some trade-offs in its accuracy. As regulators get smaller, their ability to provide for highly accurate regulation, and particularly highly accurate regulation with relatively small resultant flow from a high pressure tank, often decreases. This result is particularly true over time when the regulator may wear.

### SUMMARY OF THE INVENTION

The following summary of the invention is provided to give the reader a basic understanding of some aspects of the invention. This summary is not intended to identify key or critical elements of the invention or to delineate the scope of the invention. The sole purpose of this section is to present some concepts of the invention in a simplified form as a prelude to the more detailed description that is presented in a later section.

Because of these and other problems in the art, described herein is a regulator seat, and a gas regulator that includes this seat, which typically provides for increased accuracy in regulation without substantial increase in weight. The regulator with such a seat is believed valuable when lower resultant flow is desirable and where small inaccuracies in a literal delivery amount can be more pronounced. The regulator seat is designed so that the stationary seat in the front housing, which mates with the moveable second seat on the valve piston, has a generally cylindrical shape as opposed to the more traditional shape of a conical frustum.

There is described herein, in an embodiment, a gas regulator comprising: a front housing including a shaft support; a rear housing connected to said front housing to form an interior chamber; a valve piston located within said interior chamber, said valve piston comprising a piston face and a shaft extending from one side of said piston face, said shaft extending into said shaft support; a biasing member biasing said valve piston relative to said front housing; a first flat seat at an end of an extension within said shaft support; and a second flat seat on an end of said shaft opposing said piston face; wherein said first flat seat will form a mating connection with said second flat seat when said valve piston is biased by said biasing member; and wherein, said extension is generally cylindrical. In use the mating connection may be formed when gas pressure against the piston face overcomes the biasing of the biasing member.

In an embodiment of the gas regulator, the biasing member comprises a coil spring.

In an embodiment of the gas regulator, the biasing member comprises a compression spring.

In an embodiment of the gas regulator, the second flat seat is part of an insert into said shaft.

In an embodiment of the gas regulator, during use gas at higher pressure flows through a channel in said front housing through said extension and separates said mating connection of said first seat from said second seat, flows past said valve piston, and flows out a channel in said rear housing. It may be that, during use, gas at higher pressure flows through a channel in said front housing through said extension when said first seat is separated from said second seat, flows past said valve piston, and flows out a channel in said rear housing.

According to some embodiments there is provided breathing apparatus comprising a gas regulator as set out herein.

In an embodiment the breathing apparatus may be in the form of underwater breathing apparatus. In an embodiment the breathing apparatus may be in the form of a ventilator. In an embodiment the breathing apparatus may be in the form of an emergency breathing apparatus. In an embodiment the breathing apparatus may be in the form of an emergency breathing hood. In an embodiment the breathing apparatus may be in the form of protective breathing equipment.

In an embodiment there is provided a user-portable compressed gas storage vessel comprising a gas regulator as set out herein.

### BRIEF DESCRIPTION OF THE DRAWINGS

FIG. 1 provides a cutaway view of a gas regulator.
FIG. 2 provides a detail view of a portion of FIG. 1 illustrating a prior art seat which is in the shape of a conical frustum.
FIG. 3 provides a detail view of a similar portion of FIG. 1 illustrating a seat of the present invention which is in the general shape of a right cylinder.

### DETAILED DESCRIPTION OF PREFERRED EMBODIMENTS

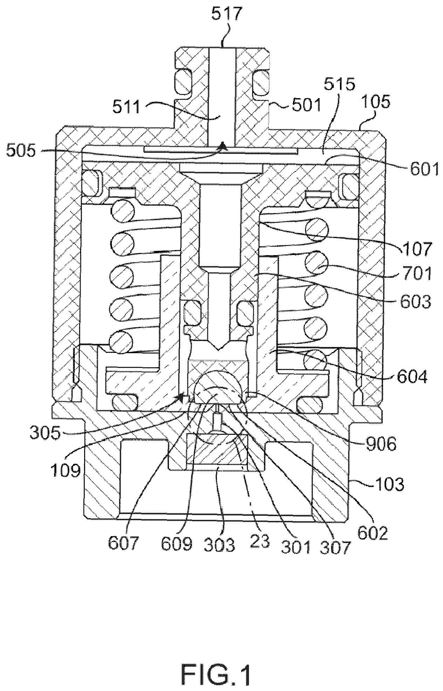

FIG. 1 provides for a cutaway view of an embodiment of a gas regulator (100) of the type commonly used in medical applications and particularly in the supply of medical oxygen for breathing. The regulator (100) comprises a housing (101) which is generally comprised of two separable components (103) and (105) which are typically made of metal or rigid plastic. The back housing (105) is typically designed to interface with oxygen tubes or similar devices, such as a those supplying a nasal cannula (not shown), so that oxygen or other gas is supplied from a high pressure tank (not shown) to the gas regulator (100), exits the gas regulator (100) at a lower pressure, and is supplied to the patient at the lower pressure. The oxygen typically comes from the tank through entrance orifice (303), into channel (301) and into the hollow interior (305) of the front housing (103), and exits into the channel (511) and ultimately the exit orifice (517).

The back housing (105) is typically attached to the front housing (103) at an opposing side of the front housing (103) to entrance orifice (303) through which gas will enter. As such, the front (103) and back (105) housing effectively enclose a hollow interior (305). The back housing (105) typically includes a hollow stem (501) which is designed to interface with a tube or with another structure through which the oxygen flow will be provided to the patient. The channel (511) of the stem (501), therefore, is open on one end (505) to the hollow interior (305) of the gas regulator (100). The opposing end comprises exit orifice (517).

Within the hollow interior (305) of the gas regulator (100), there is included a valve piston (107) which is also typically made of metal or rigid plastic. The specific shape of the valve piston (107) is variable, but will typically be a generally "T" shape in cross section to provide the function of moving back and forth against a biasing member (701) to regulate the flow of gas from the channel (301) and entrance orifice (303) into the hollow interior (305) and the channel (511). Further, the valve piston's (107) general "T" shape provides with a larger piston face (601) facing the back housing (105) and an extended shaft (603) opposing. The larger piston face (601) acts to provide a larger surface for the flowing gas to push against than the opposing end (602) of the extended shaft (603). This results in the regulation action as lower pressure gas in area (515) can provide for an increased pressure on the valve piston (107) due to the greater surface area of the piston face (601) compared with the decreased surface area of end (602) which is in contact with higher pressure gas.

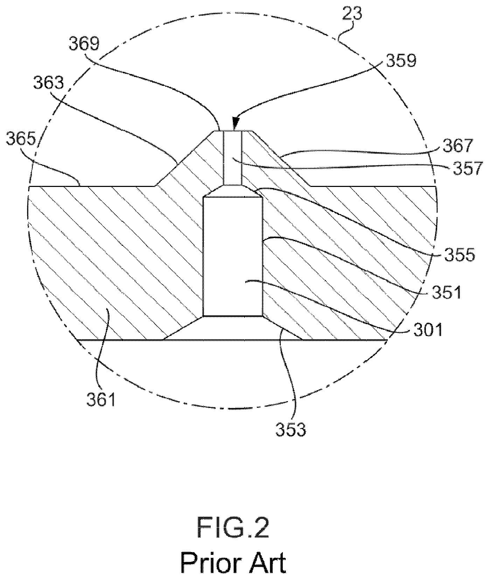

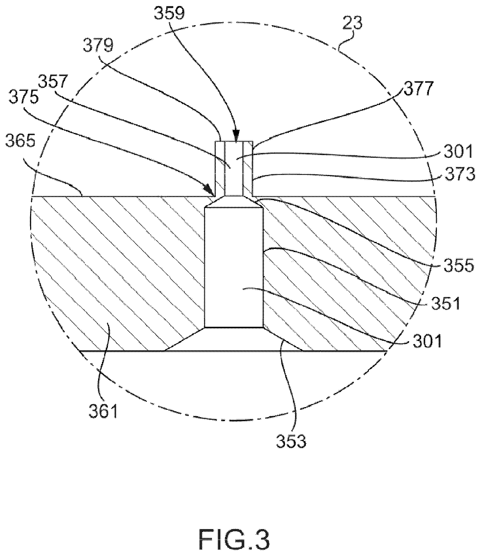

Flow from the entrance orifice (303) will typically be controlled by the movement of the piston (107) and specifically the extended shaft (603) within a shaft support (604). The shaft support (604) is typically mounted to the inside (109) of the front housing (103) and serves to provide an extended channel through which the extended shaft (603) can move generally linearly (up and down on the page in the depiction of FIG. 1). The movement of the piston (107) will variably contact a seat (307), which is formed from an extension (See FIGS. 2 and 3) located within the support (604), with an opposing mating seat (607) which is located on end (602). When the two seats (307) and (607) are in contact, the end (602) acts to block gas access from the entrance orifice (303) while when the two seats (307) and (607) are separated, gas can flow from the entrance orifice into hollow interior (305), around the piston valve (107), into chamber (515), and eventually into the channel (511).

Regulation of pressure is provided by competing pressures from the gas in conjunction with the biasing mechanism (701). Specifically, the biasing mechanism may serve to push downward in FIG. 1 (trying to mate the seats (307) and (607)) or upward in FIG. 1 depending on the relative size of the faces (601) and (602) and the desired starting and end pressure of the gas. As the surface area of the piston face (601) is greater than the face (602), gas in area (515) will generally create more force on piston face (601) than on face (602) at the same pressure. Thus, gas in chamber (515), which is at a lower pressure than gas in area (303), will be able to push the piston (107) downward with equal force than the higher pressure gas in area (303) pushing upward. As more gas flows into chamber (515), increasing pressure in chamber (515) in combination with the force of the biasing mechanism (701) which will cause the flow to cease as the piston (107) is pushed downward.

As the pressure in the channel (511) decreases from flow exiting the channel (511) via the exit orifice (517), this downward pressure on the piston face (601) decreases causing the piston (107) to move upward allowing additional gas to flow from channel (301). As this flows into channel (511) the corresponding increase in pressure in chamber (515) causes the piston (107) to again move downward reducing the flow. It should be apparent from the above that the movement of the piston (107) in conjunction with the pressure of the gas on piston face (601) will essentially result in an equilibrium state where the pressure in chamber (515) and the biasing force of the biasing member (701) are equaled for a specific flow of gas from the entrance orifice (303). This sets the pressure of the gas flowing from exit orifice (507).

As indicated above, regulation is partially provided via a biasing member (701) which serves to bias the valve piston (107) toward either the closed or open position. Thus, when gas pressure is present in chamber (515) the pressure will push against the face (601). If the pressure is sufficient, the piston (107) will move to position the two seats (307) and (607) against each other. However, when the piston (107) is in this position gas cannot flow to the chamber (515) from the channel (303).

If the force of incoming gas is sufficient, the piston (107) will move and open the gas channel (301) by unseating the seats (307) and (607). Once gas enters the hollow interior (305) it will flow to the chamber (515). As the gas in chamber (515) is somewhat slow to leave due to the restricting shape of channel (511) compared to chamber (515), the gas will serve to push the face (601) of piston (107) back toward the channel (301) and the reseating of (307) and (607). This movement is either resisted or assisted by the biasing member (701) to set the specific resultant flow rate based on the incoming flow rate which is, in turn, dictated by the pressure in the tank.

An equilibrium position will generally result with gas from entrance orifice (303) arriving in a steady stream as a constant pressure (amount) is lost from the chamber (515) through the exit orifice (517). The result is that the pressure of the gas in chamber (515), is reduced compared to the pressure that gas is supplied via the entrance orifice (303) due to the gas in chamber (515) having a greater surface area to push against compared to gas in the narrow channel (301) and the effect of the biasing of the biasing member (701). The specific pressure of the released gas is typically based on the pressure in the oxygen tank and the biasing force (and direction) supplied by the biasing member (701) along with the specific size of the various chambers (515) and (301) and orifices (517) and (303). As the biasing force of biasing member (701) can be selected (and is often tunable by associated components), the resultant gas flow rate can be selected as desired.

In FIG. 1, the biasing member (701) comprises a compression coil spring but this is by no means required and alternative biasing members (701) such as other forms of springs may be used in alternative embodiments. The seat (607) in the valve piston (107) will typically comprise a plastic or rubber insert (609) so that the seat (607) will form a seal with the seat (307) that is not metal to metal but this is also not required. This insert (609) may be generally semi-circular as shown in FIG. 1 and is designed to be "push-fit" into a corresponding orifice (906) in the end of the extended shaft (603) furthest from the face (601). The use of such a removable insert (609) can improve mating between the faces (307) and (607) as well as allowing the insert (609) to be replaced in the case of unexpected wear.

The design of the seat (307) and channel (301) is the subject of FIGS. 2 and 3 which show a much closer view of the approximate area of the circle (23) in FIG. 1. Traditionally, the seat (307) and channel (301) have had the shapes shown in FIG. 2. Specifically, the channel (301) is generally cylindrical in the main body channel (351) with a tapered entrance (353). There is also a tapered gate (355) after the main body channel (351) which connects to a secondary body channel (357). These provide some pressure regulation simply because of "bottlenecking". The secondary body channel (357) is also generally cylindrical but with a smaller diameter than the main body channel (351). The secondary body channel (357) does not end in a taper, but in a flat opening (359) at the end of an extension (363) into the volume enclosed the shaft support (604).

In the embodiment of FIG. 2, the secondary body channel (357) generally passes from the main wall (361) of the front housing (103) at about the point that the tapered gate (355) ends and the secondary body channel (357) begins. This places the secondary body channel (357) in essentially its entirety within the extension (363) which extends from the inner surface (365) of the main wall (361). In FIG. 2, the extension (363) is generally in the form of a conical frustum having a slanted exterior surface (367) leading to a flat top (369).

The flat top (369) is generally planar having the opening (359) positioned generally in the center thereof with a small ring of material of the flat top (369) being around it on all sides. The conical frustum shape has been used for the extension (363) as it is relatively easy to machine and the flat surface formed of the flat top (369) and opening (359) was expected to seal quite well against the insert (609). Specifically, the insert (609) would come into contact with the flat top (369) and as the adjacent surfaces are both generally planar, they will seal tightly.

That the insert (609) was typically not as rigid as the flat top (369) meant that the insert (609) may deform slightly from the pressure of mating. However, this deformation would simply result in a small amount of material of the insert (609) extending down the slanted side (367). Should the connection become worn over time so that the insert (609) was not in as solid of contact with the flat top (369) as it was initially, it was believed that the insert (609) would simply be pushed a little further onto the extension (363) resulting in a continued seal because the expanding shape of the side (367) would compensate for any wear in the shape formed in the insert (609) which could result in gas loss.

The present disclosure, however, provides for the extension (373) of FIG. 3, instead of that of FIG. 2, be used in a gas regulator such as that shown in FIG. 1. The extension (373) of FIG. 3 again has the secondary body channel (357) generally pass from the main wall (361) of the front housing (103) at about the point that the tapered gate (355) ends and the secondary body channel (357) begins. This structure is generally preferred, but is not required. However, as opposed to extension (363) which is generally of the form of a conical frustum having a slanted exterior surface (367) leading to a flat top (369), the extension (373) of FIG. 3 is generally cylindrical having a side (377) which is generally perpendicular to the inner surface (365) of the wall (361). The extension's (373) connection to the wall (361) at circle (375), thus, forms a generally right angle. Thus, the side (377) is generally not slanted in any substantial fashion compared to the wall (361). However, it should be recognized that limitations on the accuracy of machining tools can result in some unintended or unavoidable taper to the side (377), but that is generally to be avoided.

The flat top (379) of the extension (373) may be generally planar having the opening (359) positioned in the center thereof with a small ring of material of the flat top (379) being around it on all sides. In an alternative arrangement, the flat top (379) need not be flat but may actually be slightly rounded or curved. The flat top (379) which forms the ring of material around the opening (359) may be of similar diameter to the ring of the flat top (369) or may be slightly smaller.

It has been discovered that the opening (359) actually seals better against the insert (609) with extension (373) than with extension (363). While the exact mechanism is not known and this disclosure is not intended to be limited to any particular means of operation, it has been speculated that even when the connection begins to wear, the tortured path formed for air to escape between the extension (373) and the seat (609) requires the air to effectively turn 180 degrees in an extremely confined area to go around the essentially perpendicular walls (377) of the extension (373) may inhibit air loss for particularly small parts even if there is slight disconnection due to wear.

While the invention has been disclosed in conjunction with a description of certain embodiments, including those that are currently believed to be useful embodiments, the detailed description is intended to be illustrative and should not be understood to limit the scope of the present disclosure. As would be understood by one of ordinary skill in the art, embodiments other than those described in detail herein are encompassed by the present invention. Modifications and variations of the described embodiments may be made without departing from the spirit and scope of the invention.

It will further be understood that any of the ranges, values, properties, or characteristics given for any single component of the present disclosure can be used interchangeably with any ranges, values, properties, or characteristics given for any of the other components of the disclosure, where compatible, to form an embodiment having defined values for each of the components, as given herein throughout. Further, ranges provided for a genus or a category can also be applied to species within the genus or members of the category unless otherwise noted.

The qualifier "generally," and similar qualifiers as used in the present case, would be understood by one of ordinary skill in the art to accommodate recognizable attempts to conform a device to the qualified term, which may nevertheless fall short of doing so. This is because terms such as "orthogonal" are purely geometric constructs and no real-world component or relationship is truly "orthogonal" in the geometric sense. Variations from geometric and mathematical descriptions are unavoidable due to, among other things, manufacturing tolerances resulting in shape variations, defects and imperfections, non-uniform thermal expansion, and natural wear. Moreover, there exists for every object a level of magnification at which geometric and mathematical descriptors fail due to the nature of matter. One of ordinary skill would thus understand the term "generally" and relationships contemplated herein regardless of the inclusion of such qualifiers to include a range of variations from the literal geometric meaning of the term in view of these and other considerations.

## Claims

1. A gas regulator (100) comprising:
a front housing (103) including a shaft support (604);
a rear housing (105) connected to said front housing (103) to form an interior chamber;
a valve piston (107) located within said interior chamber, said valve piston (107) comprising a piston face (601) and a shaft (603) extending from one side of said piston face (601), said shaft (603) extending into said shaft support (604);
a biasing member (701) biasing said valve piston (107) relative to said front housing (103);
a first flat seat (307, 379) at an end of an extension (373) within said shaft support (604); and
a second flat seat (607) on an end (602) of said shaft (603) opposing said piston face (601);
wherein said first flat seat (307, 379) will form a mating connection with said second flat seat (607) when gas pressure against said piston face (6001) overcomes biasing by said biasing member (701); and
wherein, said extension (373) is generally cylindrical.

2. The gas regulator of claim 1, wherein said biasing member (701) comprises a coil spring.

3. The gas regulator of claim 1, wherein said biasing member (701) comprises a compression spring.

4. The gas regulator of claim 1, 2 or 3, wherein said second flat seat (607) is part of an insert (609) into said shaft (603).

5. The gas regulator of claim 1, 2, 3 or 4, wherein in use gas at higher pressure flows through a channel (301) in said front housing (103) through said extension (373) when said first flat seat (307, 379) is separated from said second flat seat (607), flows past said valve piston (107), and flows out a channel (511) in said rear housing (105).

6. Breathing apparatus comprising a gas regulator as claimed in any preceding claim.

7. Breathing apparatus as claimed in claim 6, in the form of underwater breathing apparatus, a ventilator, an emergency breathing apparatus, an emergency breathing hood or protective breathing equipment.

8. A user-portable compressed gas storage vessel comprising a gas regulator as claimed in any of claims 1 to 5.
